# EUROPEAN PATENT APPLICATION

(11) **EP 3 973 778 A1**
(43) Date of publication of application: **30.03.2022**
(21) Application number: 20808277.6
(22) Date of filing: 06.02.2020
(51) Int. Cl.: A01N 55/02, A01N 37/36, A01N 37/06, A01N 25/02

(54) **FREEZE-RESISTANT DISINFECTANT COMPOSITION AND PREPARATION METHOD THEREFOR**

(30) Priority: 23.05.2019 KR 20190060741
(71) Applicant: Elves Chemical Co., Ltd., Anseong-si, Gyeonggi-do 17555 (KR)
(72) Inventor: KIM, Se Yoon, Gwangju 61951 (KR)
(74) Representative: V.O.
(86) International application number: PCT/KR2020/001701
(87) International publication number: WO 2020/235774

(57) **Abstract**

The present invention relates to a freeze-resistant disinfectant composition and a preparation method therefor, and the purpose thereof is to provide: an eco-friendly freeze-resistant disinfectant composition which is composed of a disinfectant composition, a siloxane oligomer and a solvent so as to be sprayed and dispersed at a low concentration while maintaining an unfrozen state at a low temperature, thereby maintaining antibacterial and antiviral activities, and which is oxidized within a short time when in contact with water, so as to be converted into a nontoxic form; and a preparation method therefor. The present invention relates to: a freeze-resistant disinfectant composition containing a siloxane oligomer, a solvent, and a disinfectant compound selected from among a silver compound and an organic acid compound; and a preparation method therefor, and the prepared freeze-resistant disinfectant composition can kill, even at a low concentration, all of various types of bacteria and viruses at a low temperature, and maintain antibacterial and antiviral activity even at low temperature of -20 °C by means of freeze-resistance.

## Description

### [Technical Field]

The present disclosure relates to a freeze-resistant disinfectant composition and a method for preparing the same, more particularly to a freeze-resistant antibacterial or antiviral disinfectant composition comprising a silver (Ag) compound or an organic acid compound as a disinfectant ingredient, a siloxane oligomer, and a solvent, which can be sprayed and dispersed without freezing even at low temperature, and a method for preparing the same.

### [Background Art]

The existing disinfectants are classified largely into organic and inorganic disinfectants. Until the early 2000s, organic disinfectants have been used in general.

However, organic disinfectants are disadvantageous in that a large amount of 1000-2000 ppm on average is necessary and they may cause environmental problems because they are not decomposed well but absorbed and accumulated in the body of organisms.

To solve this problem, inorganic disinfectants developed using nanotechnology are being used since the 2000s. Although inorganic disinfectants exhibit disinfection activity at a relatively low concentration of 20-50 ppm, they also require a long time for decomposition like the organic disinfectants.

The representative pathogenic organisms causing problems in animal husbandry, fish farming, etc. recently include *Staphylococcus aureus, Salmonella,* avian influenza virus, foot-and-mouth disease virus, etc. Among the bacteria in the genus *Salmonella, Salmonella typhimurium* has a short incubation period and causes fever, vomiting, food poisoning, enteritis, etc. in human or animals. It is designated as class 1 infectious disease.

Avian influenza virus is one of the viruses occurring in poultry such as chicken and duck or in wild birds. It causes difficulty in breathing in poultry and is classified into low pathogenic and highly pathogenic. Migratory birds play an important role in the spread of avian influenza. When low pathogenic viruses are transmitted from the migratory birds to poultry such as chicken or duck, they may exhibit high pathogenicity. In particular, chickens are killed massively when infected by avian influenza virus because of relatively low resistance, and economic loss resulting therefrom is a big social issue.

Foot-and-mouth disease is an acute infectious disease occurring in cloven-hoofed artiodactyls such as cow and pig. It is the class 1 infectious viral disease designated by law, with mortality of 5-55%. Because foot-and-mouth disease virus (*Picornaviridae aphthovirus*) is highly infectious and infects the respiratory organs by means of air, an infection in a flock is rapidly transmitted to the remaining cattle. When an animal infected with foot-and-mouth disease breathes, the virus is transmitted via air to other animals through respiratory organs. Among the artiodactyls, pigs are especially at high risk of infection because a lot of foot-and-mouth disease virus particles are included in the air exhaled by them.

Avian influenza and foot-and-mouth disease usually occur in the winter season. Thus, when disinfection is performed outdoors by spraying or dispersing, the freezing of a disinfectant becomes a severe problem.

Because the existing disinfectants cannot be used under sub-zero temperature environments because of high freezing points, the disinfectants in granule or powder form should be used. In addition, when the disinfectants are sprayed or dispersed at low temperature, the disinfection effect is very low.

### (References of Related Art)

### (Patent Documents)

(Patent document 0001) Korean Patent Registration Publication No. 10-1948738 (Feb. 11, 2019).

### [Disclosure]

### [Technical Problem]

The present disclosure is directed to providing an eco-friendly freeze-resistant disinfectant composition which is composed of a disinfectant composition, a siloxane oligomer and a solvent so as to be sprayed and dispersed at a low concentration while maintaining an unfrozen state at low temperature, thereby maintaining antibacterial and antiviral activities, and which is oxidized within a short time when contacted with water, so as to be converted into a nontoxic form; and a method for preparing the same.

### [Technical Solution]

The purpose of the present disclosure to solve the problem described above is achieved by providing an antibacterial or antiviral freeze-resistant disinfectant composition, which comprises a disinfectant compound selected from a silver compound and an organic acid compound, a siloxane oligomer and a solvent.

In a specific exemplary embodiment, the freeze-resistant disinfectant composition comprises 2-60 wt% of the disinfectant compound, 10-50 wt% of the siloxane oligomer, and 30-70 wt% of the solvent.

In a specific exemplary embodiment, the silver compound or the organic acid compound consisted in the disinfectant compound is stabilized through chemical bonding with the siloxane oligomer.

In a specific exemplary embodiment, the silver compound may be any one selected from silver acetate, silver nitrate and silver phosphate.

In a specific exemplary embodiment, the organic acid compound may be one or more selected from citric acid, malic acid, cinnamic acid, acetic acid, fumaric acid, maleic acid and tartaric acid.

In a specific exemplary embodiment, the siloxane oligomer may be represented by the following chemical formula.

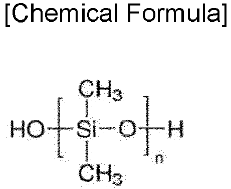

In the chemical formula, n is an integer from 14-30.

In a specific exemplary embodiment, the siloxane oligomer is a polymer produced from a hydoroxydimethylsiloxane monomer at a low degree and has a weight-average molecular weight of about 1000 to 2000.

In a specific exemplary embodiment, the freeze-resistant disinfectant composition may have antibacterial activity against *Staphylococcus aureus* or *Salmonella typhimurium,* or antiviral activity against avian influenza virus H9N2 or foot-and-mouth disease virus SAT 1.

In a specific exemplary embodiment, the freeze-resistant disinfectant composition does not freeze at low-temperature environment of -20 °C and has antibacterial or antiviral activity at a low concentration.

In a specific exemplary embodiment, the freeze-resistant disinfectant composition may have antibacterial or antiviral activity of 99.99% at -20 °C at a concentration of 50 ppm or higher.

In a specific exemplary embodiment, the freeze-resistant disinfectant composition may be sprayed or dispersed at -20 °C or higher.

In a specific exemplary embodiment, the solvent may be one or more selected from a group consisting of water, methanol, ethanol, propanol and isopropyl alcohol.

In another aspect, the purpose of the present disclosure is achieved by providing a method for preparing an antibacterial or antiviral disinfectant composition, wherein the method for preparing a freeze-resistant disinfectant composition comprising:
(a) a step of dissolving a disinfectant compound selected from a silver compound and an organic acid compound in a solvent;
(b) a step of cooling the solution that the disinfectant compound selected from a silver compound and an organic acid compound is dissolved and reacting by adding diethoxydimethylsilane dropwise;
(c) a step of further reacting the product of the step (b) by heating; and
(d) a step of filtering the product of the step (c).

In a specific exemplary embodiment, the silver compound may be any one selected from silver acetate, silver nitrate and silver phosphate.

In a specific exemplary embodiment, the organic acid compound may be one or more selected from citric acid, malic acid, cinnamic acid, acetic acid, fumaric acid, maleic acid and tartaric acid.

In a specific exemplary embodiment, the solvent may be one or more selected from a group consisting of water, methanol, ethanol, propanol and isopropyl alcohol.

In a specific exemplary embodiment, the siloxane oligomer may be represented by the following chemical formula.

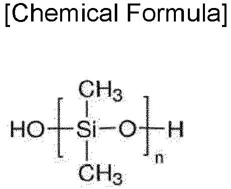

In the chemical formula, n is an integer from 14-30.

In a specific exemplary embodiment, the siloxane oligomer is a polymer produced from a hydoroxydimethylsiloxane monomer at a low degree and may have a weight-average molecular weight of about 1000 to 2000.

In a specific exemplary embodiment, the freeze-resistant disinfectant composition, which is a final product, may be prepared by adding the disinfectant compound, the solvent and the diethoxydimethylsilane such that it contains 2-60 wt% of the disinfectant compound, 10-50 wt% of the siloxane oligomer and 30-70 wt% of the solvent.

In a specific exemplary embodiment, the cooling in the step (b) may be performed at -5 to 10 °C and the heating in the step (c) may be performed at 50-70 °C.

### [Advantageous Effects]

A disinfectant composition of the present disclosure is advantageous in that, it is an organic-inorganic hybrid-type disinfectant containing a silver compound or an organic acid compound as a disinfectant ingredient and a siloxane oligomer and has physical properties particularly suitable for spraying or dispersing.

In addition, it can kill not only bacteria such as *Staphylococcus aureus* and *Salmonella* but also avian influenza virus and foot-and-mouth disease virus even with a small amount.

In addition, it is advantageous in that it exhibits superior antiviral activity against avian influenza virus and foot-and-mouth disease virus at extremely low-temperature environment of -20 °C even with a small amount while having superior antibacterial/antiviral activity.

In addition, it can be usefully utilized as an eco-friendly disinfectant because it is oxidized within a short time when contacted with water (natural water rather than purified water) and converted into a nontoxic form.

With the advantages described above, the present disclosure is expected to be industrially highly applicable.

### [Brief Description of Drawings]

FIG. 1 shows a process of preparing a freeze-resistant disinfectant composition using a silver compound and a siloxane oligomer according to an exemplary embodiment of the present disclosure.
FIG. 2 shows scanning electron microscopy (SEM) images confirming the destruction of the cell membrane of *Salmonella typhimurium* by SiO₂ microparticles impregnated with a freeze-resistant disinfectant composition according to an exemplary embodiment of the present disclosure.
FIG. 3 shows a result of investigating the antibacterial activity of a freeze-resistant disinfectant composition according to an exemplary embodiment of the present disclosure against *Salmonella typhimurium,* as compared to a control group (PBS).
FIG. 4 shows a result of investigating the antibacterial activity of a freeze-resistant disinfectant composition prepared using silver according to an exemplary embodiment of the present disclosure against avian influenza virus H9N2 at room temperature, as compared to a control group.
FIG. 5 shows a result of investigating the antibacterial activity of a freeze-resistant disinfectant composition prepared using silver according to an exemplary embodiment of the present disclosure against avian influenza virus H9N2 under a low-temperature environment (-20 °C), as compared to a control group.
FIG. 6 shows a result of treating foot-and-mouth disease virus SAT 1 with a freeze-resistant disinfectant composition prepared using an organic acid according to an exemplary embodiment of the present disclosure at room temperature and comparing the number of viruses with a control group.
FIG. 7 shows a result of comparing the freeze resistance of freeze-resistant disinfectant compositions prepared using silver and an organic acid according to an exemplary embodiment of the present disclosure at -20 °C for 30 days with a control group.

### [Description of Embodiments]

Hereinafter, exemplary embodiments of the present disclosure will be described in detail referring to the attached drawings. In the following description of the present disclosure, a detailed description of known functions or configurations will be omitted to avoid unnecessarily obscuring the present disclosure.

The respective descriptions and embodiments described in the present disclosure may also be applied to other descriptions and embodiments. That is to say, all combinations of various elements disclosed in the present disclosure fall within the scope of the present disclosure. Further, the scope of the present disclosure is not limited by the specific description given below.

In the present disclosure, a "disinfectant" collectively refers to a substance that inhibits the occurrence, growth and proliferation of pathogenic bacteria and viruses and kill them.

Also, in the present disclosure, "antibacterial" and "antiviral" collectively refer to the effect of inhibiting the occurrence, growth and proliferation of pathogenic bacteria and viruses, respectively. Throughout the present disclosure, the terms may be used interchangeably with "disinfectant".

Also, in the present disclosure, "freeze resistance" refers to the property of enduring under a low-temperature environment without freezing, and means the property of the freeze-resistant disinfectant composition of the present disclosure that maintains a form suitable for spraying or dispersing without freezing even at low temperature.

The present disclosure provides an antibacterial or antiviral freeze-resistant disinfectant composition comprising a disinfectant compound selected from a silver compound and an organic acid compound, a siloxane oligomer, and a solvent.

According to an exemplary embodiment, the freeze-resistant disinfectant composition of the present disclosure may comprise a silver compound, a siloxane oligomer, and a solvent.

According to another exemplary embodiment, the freeze-resistant disinfectant composition of the present disclosure may comprise an organic acid compound, a siloxane oligomer, and a solvent.

Specifically, the freeze-resistant disinfectant composition of the present disclosure comprises 2-60 wt% of a disinfectant compound, 10-50 wt% of a siloxane oligomer, and 30-70 wt% of a solvent.

The content of the disinfectant compound in the entire composition is limited because disinfectant effect is weak if it is lower than 2 wt% and dispersibility is decreased and synthesis is difficult if it is higher than 60 wt%.

The content of the siloxane oligomer in the entire composition is limited because the composition freezes due to low freeze resistance if it is lower than 10 wt% and productivity is decreased if it is higher than 50 wt%.

The content of the solvent in the entire composition is limited because synthesis is impossible if it is lower than 30 wt% and the composition freezes due to low freeze resistance and productivity is decreased if it is higher than 70 wt%.

The "silver compound" collectively refers to a compound containing monovalent, divalent, or trivalent silver ion and specifically may be any one of silver acetate, silver nitrate, and silver phosphate.

Preferably, may refer to silver acetate, although the present disclosure is not specially limited thereto.

The silver acetate is a substance in the form of white powder, with the chemical formula AgCH₃CO₂ and a formula weight of 166.93. It may be represented by Chemical Formula 1.

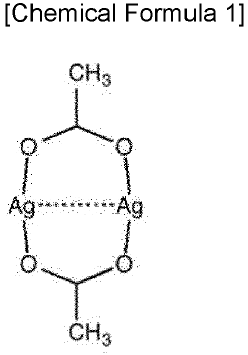

The "organic acid compound" refers to an acid having a carboxylic acid (R-COOH) functional group in a hydrocarbon (C-H) compound. Specifically, it may be any one selected from citric acid, malic acid, cinnamic acid, acetic acid, fumaric acid, maleic acid, and tartaric acid.

Specifically, it may refer to citric acid, although the present disclosure is not specially limited thereto.

Citric acid is a substance in the form of white powder, with the chemical formula C₆H₈O₇ and a formula weight of 192.12 g/mol. It may be represented by Chemical Formula 2.

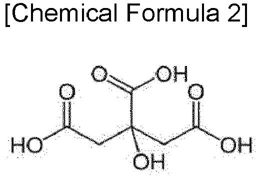

The "siloxane oligomer" refers to a compound consisting of silicon, oxygen, and hydrogen and containing Si-O bonds, i.e., an oligomer of siloxane. It refers to a substance that can act as a dispersion stabilizer of a silver compound through covalent bonding with the silver compound.

Specifically, the siloxane oligomer may be a polymer produced from a hydoroxydimethylsiloxane monomer at a low degree and may have a weight-average molecular weight of about 1000 to 2000. It may be represented by Chemical Formula 3.

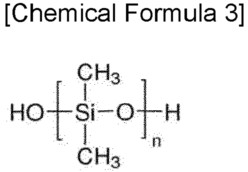

In Chemical Formula 2, n is an integer from 14-30.

The effect of the siloxane oligomer as a dispersion stabilizer for the silver compound or the organic acid compound may be the most preferable when n is within the above range. If n is larger than 30, the prepared composition is not suitable as a disinfectant for spraying or dispersing due to increased viscosity and precipitation.

In addition, since the disinfectant compound selected from a silver compound and an organic acid compound and the siloxane oligomer are sprayed or dispersed after being dissolved in the solvent, n larger than 30 is undesirable because of decreased solubility in the solvent.

The "diethoxydimethylsilane" is a compound with the chemical formula C₆H₁₆O₂Si and a molecular weight of 148.27554 g/mol. It acts as a precursor of the siloxane oligomer, i.e., the polymer of hydoroxydimethylsiloxane.

During reaction of the diethoxydimethylsilane, ethanol (EtOH) and water (H₂O) are produced as byproducts. Therefore, the disinfectant composition of the present disclosure is prepared by an eco-friendly method.

The solvent may be one or more selected from a group consisting of water, methanol, ethanol, propanol, and isopropyl alcohol, although not being specially limited thereto.

The freeze-resistant disinfectant composition is used by spraying or dispersing.

The silver compound of the antibacterial or antiviral freeze-resistant disinfectant composition is stabilized through covalent bonding with the siloxane oligomer.

In an exemplary embodiment, a silver compound (silver acetate) is prepared by reducing silver ion with acetic acid and it is stabilized by treating with a siloxane oligomer prepared from diethoxydimethylsilane as a precursor, i.e., a polymer of hydoroxydimethylsiloxane.

In addition, the organic acid compound of the antibacterial or antiviral freeze-resistant disinfectant composition is stabilized through hydrogen bonding between the organic acid and the siloxane oligomer.

In an exemplary embodiment, any monovalent or multivalent organic acid selected from a group consisting of citric acid, malic acid, cinnamic acid, acetic acid, fumaric acid, maleic acid, and tartaric acid may be stabilized by treating with a siloxane oligomer prepared from diethoxydimethylsilane as a precursor, i.e., a polymer of hydoroxydimethylsiloxane.

The freeze-resistant disinfectant composition has not only antibacterial activity but also antiviral activity. Specifically, it may have antibacterial activity against *Staphylococcus aureus* or bacteria in the genus *Salmonella,* or antiviral activity against avian influenza virus and foot-and-mouth disease virus.

Preferably, the bacteria in the genus *Salmonella* may be *Salmonella typhimurium,* and the virus may be avian influenza virus H9N2 or foot-and-mouth disease virus A, C, O, Asia 1 or SAT 1, although the present disclosure is not specially limited thereto.

The present disclosure also provides a method for preparing a freeze-resistant disinfectant composition, which comprises:
(a) a step of dissolving a disinfectant compound selected from a silver compound and an organic acid compound in a solvent;
(b) a step of cooling the solution that the disinfectant compound selected from a silver compound and an organic acid compound is dissolved and reacting by adding diethoxydimethylsilane dropwise;
(c) a step of further reacting the product of the step (b) by heating; and
(d) a step of filtering the product of the step (c).

The "diethoxydimethylsilane" is a compound with the chemical formula C₆H₁₆O₂Si and a molecular weight of 148.27554 g/mol. It acts as a precursor of the siloxane oligomer, i.e., the polymer of hydoroxydimethylsiloxane.

During reaction of the diethoxydimethylsilane, ethanol (EtOH) and water (H₂O) are produced as byproducts. Therefore, the disinfectant composition of the present disclosure is prepared by an eco-friendly method.

The solvent in the step (a) may be one or more selected from a group consisting of water, methanol, ethanol, propanol, and isopropyl alcohol.

The cooling in the step (b) may be performed at -5~ to ~10 °C, preferably at -5 °C, although the present disclosure is not limited thereto.

The heating in the step (c) may be performed at 50 to 70 °C, preferably at ~70 °C, although the present disclosure is not limited thereto.

The filtering in the step (d) may be performed according to a method and a protocol well known in the art.

The preparation method is a one-pot synthesis method, in which chemical bonding between the reactants with different properties (e.g., metal and organic compounds) is formed in a single reactor.

The prepared organic-inorganic hybrid compound has physical and chemical properties of a single compound, rather than that of a mixture.

In an exemplary embodiment of the present disclosure, silver acetate is added to H₂O as a solvent and stirred for 30 minutes until it is dissolved completely. Then, the solution in which the silver acetate is dissolved completely is cooled to -5 °C.

Thereafter, diethoxydimethylsilane is slowly added to the solution dropwise and reaction is conducted by stirring for 3-4 hours.

After the reaction at low temperature is completed, the solution is heated to 50-70 °C and then reaction is conducted further for about 3-4 hours.

After the reaction at high temperature is completed, the reactor is cooled to room temperature and a freeze-resistant disinfectant composition is prepared by filtering the product in the reactor.

In another exemplary embodiment of the present disclosure, citric acid and malic acid are added to H₂O as a solvent and stirred for 30 minutes until they are dissolved completely. Then, the solution in which the citric acid and the malic acid are dissolved completely is cooled to -5 °C.

Thereafter, diethoxydimethylsilane is slowly added to the solution dropwise and reaction is conducted by stirring for 3-4 hours. After the reaction at low temperature is completed, the solution is heated to 50-70 °C and then reaction is conducted further for about 3-4 hours.

After the reaction at high temperature is completed, the reactor is cooled to room temperature and a freeze-resistant disinfectant composition is prepared by filtering the product in the reactor.

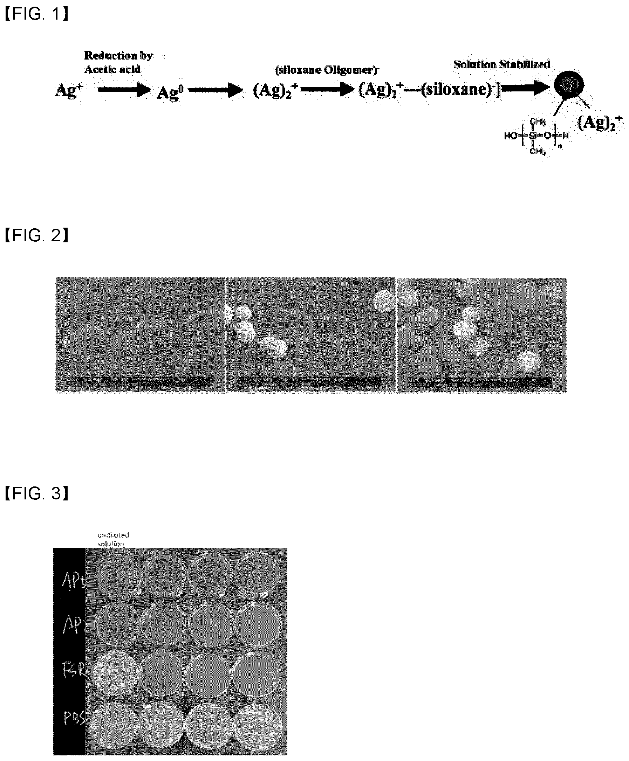

FIG. 1 shows a process of preparing a freeze-resistant disinfectant composition using a silver compound and a siloxane oligomer according to an exemplary embodiment of the present disclosure, by preparing a silver compound (silver acetate) by reducing silver ion with acetic acid and stabilizing the same by treating with a siloxane oligomer prepared from diethoxydimethylsilane as a precursor.

FIG. 2 shows scanning electron microscopy (SEM) images confirming the destruction of the cell membrane of *Salmonella typhimurium* by SiO₂ microparticles impregnated with a freeze-resistant disinfectant composition according to an exemplary embodiment of the present disclosure.

FIG. 3 shows a result of investigating the antibacterial activity of a freeze-resistant disinfectant composition prepared using silver according to an exemplary embodiment of the present disclosure against *Salmonella typhimurium* at concentrations of 5 ppm (AP5), 2 ppm (AP2) and 0.2 ppm (FSR), as compared to a control group (PBS).

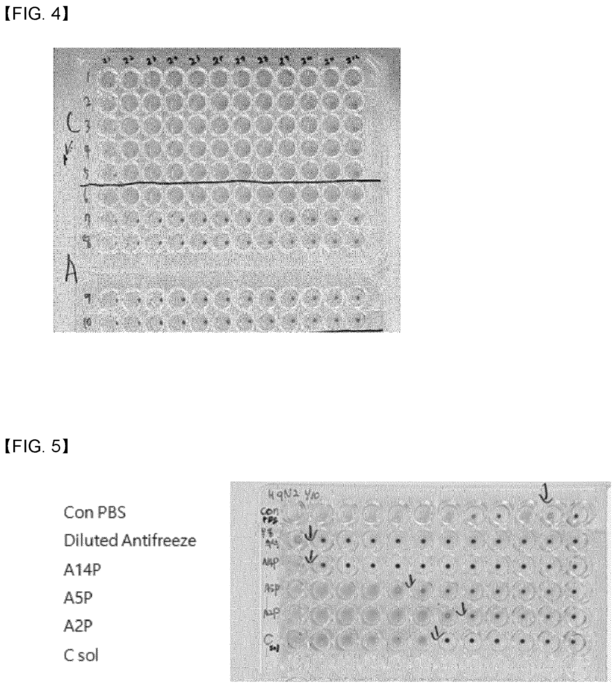

FIG. 4 shows a result of investigating the antibacterial activity of a freeze-resistant disinfectant composition prepared using silver according to an exemplary embodiment of the present disclosure (rows 6-10) against avian influenza virus H9N2 at room temperature, as compared to a control group (rows 1-5).

FIG. 5 shows a result of investigating the antibacterial activity of a freeze-resistant disinfectant composition prepared using silver according to an exemplary embodiment of the present disclosure against avian influenza virus H9N2 at concentrations of 14 ppm (A14P), 5 ppm (A5P) and 2 ppm (A2P) under a low-temperature environment (-20 °C), as compared to a control group.

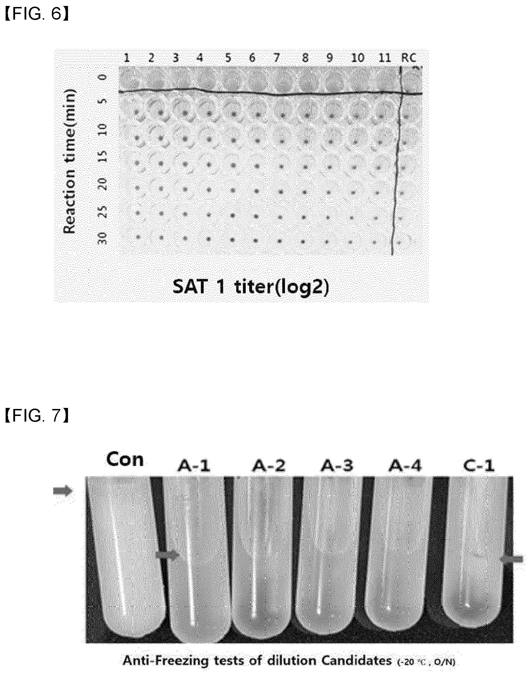

FIG. 6 shows a result of treating foot-and-mouth disease virus SAT 1 with a freeze-resistant disinfectant composition prepared using an organic acid according to an exemplary embodiment of the present disclosure at 300 ppm at room temperature (rows 5-30) and comparing the number of viruses with a control group (row 0) with 5-minute intervals.

FIG. 7 shows a result of comparing the freeze resistance of freeze-resistant disinfectant compositions prepared using silver (A-1 to A-4; A-1: undiluted freeze-resistant disinfectant, A-2: 2-fold dilution of A-1, A-3: 3-fold dilution of A-1, A-4: 4-fold dilution of A1) and an organic acid (C-1: undiluted) according to an exemplary embodiment of the present disclosure at -20 °C for 30 days with a control group (Con).

As a result of treating *Staphylococcus aureus, Salmonella typhimurium,* avian influenza virus H9N2 and foot-an *Salmonella typhimurium* d-mouth disease virus SAT 1 with the antibacterial or antiviral freeze-resistant disinfectant compositions, it was confirmed that the disinfectant compositions prepared using silver (Ag) and an organic acid exhibited very superior activity as a disinfectant, with disinfectant effect of 99.99% against *Staphylococcus aureus, Salmonella typhimurium* and avian influenza virus even at a very low concentration of about 2 ppm.

In addition, the disinfectant compositions prepared using silver (Ag) and an organic acid exhibited superior activity as a disinfectant, with disinfectant effect of 99.99% against foot-and-mouth disease virus SAT 1 even at a relatively low concentration of about 300 ppm.

In addition, the antibacterial or antiviral compositions did not freeze under a low-temperature environment of -20 °C and exhibited a disinfectant effect of 99.99% against avian influenza virus H9N2 even at a low concentration of 14 ppm. Furthermore, they exhibited a disinfectant effect of 99.99% against foot-and-mouth disease virus SAT 1 at a relatively low concentration of 500 ppm. Therefore, it was confirmed that they can exhibit superior effect as a disinfectant against avian influenza virus and foot-and-mouth disease virus that may occur under the low-temperature environment of winter season.

The antibacterial or antiviral freeze-resistant disinfectant composition of the present disclosure may be sprayed or dispersed to the soil or water of farmland, fish farm, cattle shed or poultry farm.

When the freeze-resistant disinfectant composition is sprayed or dispersed and comes in contact with water, the silver is oxidized to a nontoxic metal oxide (AgO) within 6 hours. And, the organic acid, which is used as a food additive (for enhancing sour taste) is decomposed easily in the nature and has no concern of absorption or accumulation in organisms. Accordingly, the freeze-resistant disinfectant composition of the present disclosure can be used as a more eco-friendly disinfectant.

Hereinafter, the present disclosure will be described in more detail through examples. However, the following examples are provided only to illustrate the present disclosure and the scope of the present disclosure is not limited by them.

### (Example 1) Preparation of freeze-resistant disinfectant composition using silver compound

### 1-1) Preparation of freeze-resistant disinfectant composition using silver acetate

54 g of silver acetate was added to 1.5 L of H₂O and dissolved completely by stirring at 400-600 rpm for 30 minutes. Then, the solution wherein silver acetate was dissolved completely was cooled to -5 °C. After slowly dropping 741.40 g of diethoxydimethylsilane to the solution, reaction was conducted by stirring at 400-600 rpm for 3-4 hours. After the reaction at low temperature was completed, the solution was heated to 50-70 °C and reaction was conducted further for about 3-4 hours. After the reaction at high temperature was completed, the reactor was cooled to room temperature and a freeze-resistant disinfectant composition was prepared by filtering the product in the reactor.

### 1-2) Preparation of freeze-resistant disinfectant composition using silver nitrate

A freeze-resistant disinfectant composition was prepared with the same condition and process as in Example 1-1 except that 168 g of silver nitrate was used instead of silver acetate.

### 1-3) Preparation of freeze-resistant disinfectant composition using silver phosphate

A freeze-resistant disinfectant composition was prepared with the same condition and process as in Examples 1-1 and 1-2 except that 139.51 g of silver phosphate was used instead of silver acetate.

### (Example 2) Preparation of freeze-resistant disinfectant composition using organic acid

### 2-1) Preparation of freeze-resistant disinfectant composition using citric acid

1500 g of citric acid was added to 500mL of H₂O and dissolved completely by stirring at 400-600 rpm and 50 °C for 20 minutes. Then, the solution wherein citric acid was dissolved completely was cooled to -5 °C. After slowly dropping 500 g of diethoxydimethylsilane to the solution, reaction was conducted by stirring at 400-600 rpm for 3-4 hours. After the reaction at low temperature was completed, the solution was heated to 50-70 °C and reaction was conducted further for about 3-4 hours. After the reaction at high temperature was completed, the reactor was cooled to room temperature and a freeze-resistant disinfectant composition was prepared by filtering the product in the reactor.

### 2-2) Preparation of freeze-resistant disinfectant composition using malic acid

A freeze-resistant disinfectant composition was prepared with the same condition and process as in Example 1-1 except that 134 g of malic acid was used instead of citric acid.

### 2-3) Preparation of freeze-resistant disinfectant composition using cinnamic acid

A freeze-resistant disinfectant composition was prepared with the same condition and process as in Example 2-1 except that 148.16 g of cinnamic acid was used instead of citric acid.

### (Example 3) Confirmation of antibacterial activity of disinfectant composition

After diluting the freeze-resistant disinfectant compositions prepared in Example 1 and Example 2 to 2 ppm, 5 ppm, 14 ppm or 50 ppm, antibacterial activity against *Staphylococcus aureus* and *Salmonella typhimurium* was tested.

### 2-1) Antibacterial activity against Staphylococcus aureus (S. aureus)

**[Table 1]**

| Concentration | Example 1-1 | Example 1-2 | Example 2-1 |
|---|---|---|---|
| 2 ppm | 99.99% | 99.99% | 99.99% |
| 5 ppm | 99.99% | 99.99% | 99.99% |
| 14 ppm | 99.99% | 99.99% | 99.99% |
| 50 ppm | 99.99% | 99.99% | 99.99% |

As seen from Table 1, the freeze-resistant disinfectant compositions prepared in Example 1 and Example 2 exhibited superior effect as disinfectants against *Staphylococcus aureus,* with disinfectant effect of 99.99% at all the concentrations of 2 ppm, 5 ppm, 14 ppm and 50 ppm.

### 2-2) Antibacterial activity against Salmonella typhimurium

As seen from FIG. 2, the disinfectant composition prepared in Example 1 exhibited superior effect as a disinfectant against *Salmonella typhimurium* because it destroyed the cell membrane of *Salmonella typhimurium* with the lapse of time.

In addition, when the freeze-resistant disinfectant composition of the present disclosure was treated to *Salmonella typhimurium* at 5 ppm (AP5), 2 ppm (AP2) and 0.2 ppm (FSR), it was confirmed that *Salmonella typhimurium* could be killed even at the low concentrations of 5 ppm and 2 ppm unlike the control group (PBS), as can be seen from FIG. 3.

### (Example 3) Confirmation of antibacterial activity at room temperature and low-temperature environment

After diluting the freeze-resistant disinfectant composition prepared in Example 1 to 2 ppm, 5 ppm, 14 ppm and 50 ppm, antibacterial activity against avian influenza virus H9N2 was tested at room temperature and low-temperature environment.

### 3-1) Antibacterial activity against avian influenza virus H9N2 at room temperature (25 °C)

**[Table 2]**

| Concentration | Example 1-1 | Example 1-2 | Example 2-1 |
|---|---|---|---|
| 2 ppm | 99.99% | 99.99% | 99.99% |
| 5 ppm | 99.99% | 99.99% | 99.99% |
| 14 ppm | 99.99% | 99.99% | 99.99% |
| 50 ppm | 99.99% | 99.99% | 99.99% |

As seen from Table 2, the disinfectant compositions prepared in Example 1 and Example 2 exhibited superior effect as disinfectants against avian influenza virus, with disinfectant effect of 99.99% at all the concentrations of 2 ppm, 5 ppm, 14 ppm and 50 ppm.

In addition, for hemagglutination inhibition (HI) assay, after injecting an aqueous mixture solution prepared by mixing the disinfectant composition prepared in Example 1 and avian influenza virus H9N2 for 30 minutes into a chicken egg (1 week before hatching) at room temperature, blood was taken from the egg 24 hours later and it was investigated whether hemagglutination occurred.

As seen from FIG. 4, when the egg was treated with the freeze-resistant disinfectant composition of the present disclosure (rows 6-10), red blood cells were settled down as avian influenza virus H9N2 was neutralized. In contrast, for the egg of the control group (rows 1-5) treated with distilled water, it can be seen that red blood cells were agglutinated by H9N2 virus. This result shows that the disinfectant composition of the present disclosure exhibits antiviral activity by inactivating avian influenza virus H9N2.

### 3-2) Antibacterial activity against avian influenza virus H9N2 at low temperature (-20 °C)

**[Table 3]**

| Concentration | Example 1-1 | Example 1-2 | Example 2-1 |
|---|---|---|---|
| 2 ppm | < 80% | < 80% | < 80% |
| 5 ppm | < 80% | < 80% | < 80% |
| 50 ppm | 99.99% | 99.99% | 99.99% |
| 300 ppm | 99.99% | 99.99% | 99.99% |

As seen from Table 3, the freeze-resistant disinfectant compositions prepared in Example 1 and Example 2 exhibited relatively low disinfectant effect of lower than 80% at low concentrations of 2 ppm and 5 ppm, but showed disinfectant effect of 99.99% at concentrations of 50 ppm and 300 ppm, like at room temperature.

### 3-3) Antibacterial activity against foot-and-mouth disease virus SAT1 at low temperature (-20 °C)

**[Table 4]**

| Concentration | Example 1-1 | Example 1-2 | Example 2-1 |
|---|---|---|---|
| 50 ppm | < 80% | < 80% | < 80% |
| 100 ppm | < 80% | < 80% | < 80% |
| 300 ppm | 99.9% | 99.9% | 99.9% |
| 600 ppm | 99.99% | 99.99% | 99.99% |

As seen from Table 4, the disinfectant composition prepared in Example 1 exhibited relatively low disinfectant effect of lower than 80% at low concentrations of 50 ppm and 100 ppm, but showed disinfectant effect of 99.9% or higher at concentrations of 300 ppm and 600 ppm, like at room temperature.

In addition, as a result of conducting hemagglutination inhibition (HI) assay in the same manner as in Example 3-1 by treating avian influenza virus H9N2 at low temperature (-20 °C) with the freeze-resistant disinfectant composition of the present disclosure at concentrations of 14 ppm (A14P), 5 ppm (A5P) and 2 ppm (A2P), as seen from FIG. 5, red blood cells were settled down at all the concentrations as avian influenza virus H9N2 was inactivated or killed. In contrast, for the control group, it was confirmed that red blood cells were infected by H9N2 virus.

Also, as seen from FIG. 6, it was confirmed that foot-and-mouth disease virus SAT 1 was inactivated or killed by the disinfectant composition of Example 2-1 at low temperature (-20 °C) environment. This means that the disinfectant composition of the present disclosure maintains disinfectant effect even at low temperature of -20 °C and can exhibit superior effect as a disinfectant against avian influenza virus and foot-and-mouth disease virus that may occur at low-temperature environment in the winter season.

The present disclosure is not limited by the specific exemplary embodiments described above. Those having ordinary knowledge in the art to which the present disclosure belongs can change the exemplary embodiments variously and such changes are included within the scope of the appended claims.

## Claims

1. An antibacterial or antiviral disinfectant composition, wherein the freeze-resistant disinfectant composition comprises a disinfectant compound selected from a silver compound and an organic acid compound; a siloxane oligomer; and a solvent.

2. The composition according to claim 1,
wherein the freeze-resistant disinfectant composition comprises 2-60 wt% of the disinfectant compound, 10-50 wt% of the siloxane oligomer, and 30-70 wt% of the solvent.

3. The composition according to claim 1,
wherein the silver compound or the organic acid compound consisted in the disinfectant compound is stabilized through chemical bonding with the siloxane oligomer.

4. The composition according to claim 1,
wherein the silver compound is any one selected from silver acetate, silver nitrate, and silver phosphate.

5. The composition according to claim 1,
wherein the organic acid compound is one or more selected from citric acid, malic acid, cinnamic acid, acetic acid, fumaric acid, maleic acid, and tartaric acid.

6. The composition according to claim 1,
wherein the siloxane oligomer is represented by the following chemical formula: 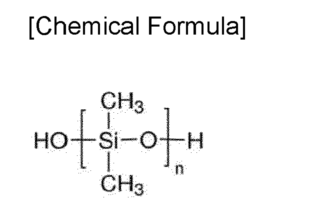 wherein n is an integer from 14-30.

7. The composition according to claim 1 or 6,
wherein the siloxane oligomer is a polymer produced from a hydoroxydimethylsiloxane monomer at a low degree and has a weight-average molecular weight of about 1000 to 2000.

8. The composition according to claim 1,
wherein the freeze-resistant disinfectant composition has antibacterial activity against *Staphylococcus aureus* or *Salmonella typhimurium,* or antiviral activity against avian influenza virus H9N2 or foot-and-mouth disease virus SAT 1.

9. The composition according to claim 1 or 8,
wherein the freeze-resistant disinfectant composition does not freeze at low-temperature environment of -20 °C and has antibacterial or antiviral activity at a low concentration.

10. The composition according to claim 1,
wherein the freeze-resistant disinfectant composition has antibacterial or antiviral activity of 99.99% at -20 °C at a concentration of 50 ppm or higher.

11. The composition according to claim 6,
wherein the freeze-resistant disinfectant composition is sprayed or dispersed at -20 °C or higher.

12. The composition according to claim 1,
wherein the solvent is one or more selected from a group consisting of water, methanol, ethanol, propanol, and isopropyl alcohol.

13. A method for preparing an antibacterial or antiviral disinfectant composition, wherein the method for preparing a freeze-resistant disinfectant composition comprising:
(a) a step of dissolving a disinfectant compound selected from a silver compound and an organic acid compound in a solvent;
(b) a step of cooling the solution that the disinfectant compound selected from a silver compound and an organic acid compound is dissolved and reacting by adding diethoxydimethylsilane dropwise;
(c) a step of further reacting the product of the step (b) by heating; and
(d) a step of filtering the product of the step (c).

14. The method according to claim 13,
wherein the silver compound is any one selected from silver acetate, silver nitrate, and silver phosphate.

15. The method according to claim 13,
wherein the organic acid compound is one or more selected from citric acid, malic acid, cinnamic acid, acetic acid, fumaric acid, maleic acid, and tartaric acid.

16. The method according to claim 1,
wherein the solvent is one or more selected from a group consisting of water, methanol, ethanol, propanol, and isopropyl alcohol.

17. The method according to claim 13,
wherein the siloxane oligomer is represented by the following chemical formula: 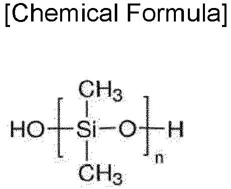 wherein n is an integer from 14-30.

18. The method according to claim 13 or 17,
wherein the siloxane oligomer is a polymer produced from a hydoroxydimethylsiloxane monomer at a low degree and may have a weight-average molecular weight of about 1000 to 2000.

19. The method according to claim 13,
wherein the freeze-resistant disinfectant composition, which is a final product, is prepared by adding the disinfectant compound, the solvent, and the diethoxydimethylsilane such that it comprises 2-60 wt% of the disinfectant compound, 10-50 wt% of the siloxane oligomer, and 30-70 wt% of the solvent.

20. The method according to claim 13,
wherein the cooling in the step (b) is performed at -5-10 °C and the heating in the step (c) is performed at 50-70 °C.
